# EUROPEAN PATENT APPLICATION

(11) **EP 4 202 690 A1**
(43) Date of publication of application: **28.06.2023**
(21) Application number: 21218387.5
(22) Date of filing: 30.12.2021
(51) Int. Cl.: G06F 11/36

(54) **METHOD AND ELECTRONIC CHECKING SYSTEM FOR CHECKING PERFORMANCES OF AN APPLICATION ON A TARGET EQUIPMENT OF A VEHICLE, RELATED COMPUTER PROGRAM AND APPLICATIONS PLATFORM**

(30) Priority: 27.12.2021 PT 2021117690
(71) Applicant: Faurecia Aptoide Automotive, Lda, 1600-024 Lisbonne (PT)
(72) Inventor: CARDOSO, Tiago, 2855-579 CORROIOS (PT); LIN, Qinglong, 60110 Méru (FR)
(74) Representative: Lavoix

(57) **Abstract**

This method for checking performances of an application on a target equipment of a vehicle before validating said application into an applications catalog of a vehicle equipment manufacturer, is implemented by an electronic system and comprises:
- receiving (100) an application selected by a user among different applications provided on an applications platform, said platform comprising a channel for said applications catalog of said vehicle equipment manufacturer and dedicated for storing different applications;
- providing (110) a set of testing items to be selected by the user;
- generating (120) a testing workflow according to the selected testing items;
- testing (130) the application to generate a testing result by carrying out the testing workflow;
- comparing (136) said testing result with an expected reference result, and
- delivering (140) a checking message including a checking result for the application, said user being a user designed by said vehicle equipment manufacturer or said vehicle equipment manufacturer.

## Description

### FIELD OF THE INVENTION

The present invention relates to a method for checking performances of an application on a target equipment of a vehicle before validating into an applications catalog of a vehicle equipment manufacturer, the method being implemented by an electronic system.

The invention also relates to a computer program product including software instructions which, when implemented by a computer, implement such a checking method.

The invention also relates to an electronic checking system for checking performances of an application on a target equipment of a vehicle before validating into an applications catalog of a vehicle equipment manufacturer.

The invention also relates to an applications platform, which enables different applications developers to upload different applications, different vehicle equipment manufacturers to select applications to be tested according to the checking method of the invention, and a user of a target equipment of a vehicle to select an application to be executed on said vehicle.

The invention concerns the field of checking applications, namely software applications, in particular mobile software applications, more commonly designated as "mobile apps".

The invention may apply in particular in an automotive environment.

### BACKGROUND OF THE INVENTION

In the recent years, the use of mobile devices, implementing mobile applications, has increased exponentially. Such mobile applications are executed on operating systems for mobile devices, which provide a suitable execution environment, such as Android^{®}. The use of mobile applications has been developed for various devices such as mobile phones, smart watches, tablet computers, and also for other types of mobile devices such as programmable devices integrated in automotive systems such as car dashboards.

The mobile applications are executable on the operating system by executing code instructions stored in an associated executable file, the code instructions being generated according to the operating system. Furthermore, the operating system provides so-called native libraries which can be used by a mobile application. A mobile application may further use resources or assets, the use of which may be related to the hardware resources of the device hosting the mobile application.

For one aspect, currently, the mobile applications are mainly provided to smartphones through applications platforms, likely "APP store" for mobile phones with IOS system, "Google Play" for mobile phones with Android systems, and generally the vehicles are not allowed to execute directly any application in these applications platforms.

In order to enable the execution of applications provided on these platforms on the vehicles, nowadays, such applications are executed by connecting mobile phones to vehicles via CarPlay^{®}, Android Auto@ or MirrorLink^{®}. Therefore, the current solution is not very user-friendly for the use case in vehicles and presents a need to improve the user experience.

For another aspect, it is important to ensure that a given application is capable of being executed with a good behavior, in particular a good quality and a good stability, on the vehicle equipment. This is particularly important when the hosting device is a device within a critical environment, which is the case of vehicle equipment, i.e. automotive device.

However, the execution environment, such as Android Auto@ or Apple CarPlay^{®}, do not provide the necessary tools for different vehicle equipment manufacturers to check different applications with various aspects, such as the safety of the application according to the regulation in different countries and the compatibility with different kind of vehicles.

A manual checking by an expert may be cumbersome and slow, especially if a large number of applications is considered. Therefore, there is a need to improve the checking method.

### SUMMARY OF THE INVENTION

An object of the invention is therefore to provide a method and a related electronic checking system for checking performances of an application on a target equipment of a vehicle before validating into an applications catalog of a vehicle equipment manufacturer that allows an easier and more efficient check of the application.

For this purpose, the subject-matter of the invention is a method for checking performances of an application on a target equipment of a vehicle before validating said application into an applications catalog of a vehicle equipment manufacturer, the method being implemented by an electronic checking system and comprising the following steps:
- receiving an application selected by a user among different applications provided on an applications platform, said platform comprising a channel for said applications catalog of said vehicle equipment manufacturer and dedicated for storing different applications;
- providing a set of testing items to be selected by the user;
- generating a testing workflow according to the selected testing items;
- testing the application to generate a testing result by carrying out the testing workflow;
- comparing said testing result with an expected reference result, and
- delivering a checking message including a checking result for the application, said user being a user designed by said vehicle equipment manufacturer or said vehicle equipment manufacturer.

According to other advantageous aspects of the invention, the checking method comprises one or several of the following features, taken individually or according to any technically possible combination:
- said method further comprises a step of recording of said testing result;
- said checking message includes a recommendation for said vehicle equipment manufacturer to validate or reject said application;
- during the providing step, said set of testing items comprises at least one item chosen among the group comprising: a security test, a hardware compatibility test, a connectivity compatibility test, an operating system compatibility test, and a services provider dependencies test;
- during the generating step, the testing workflow is generated according further to a predefined testing workflow;
   the predefined testing workflow being preferably a sequence of all items of the set of testing items, in a predefined order;
- the testing workflow is generated by withdrawing, from the predefined testing workflow, the non-selected testing items;
- said method further comprises a step of computing said testing workflow into a test scenario which comprises a series of elementary testing elements, and an elementary result being calculated by comparing the behavior of the application running on the target equipment with a reference behavior for each elementary testing element, the elementary result being correct if a gap between the application behavior and the reference behavior is below a predefined threshold, and the elementary result being incorrect otherwise;
- the step of comparing includes acquiring a sequence of image(s) displayed on a screen of the target equipment when the application is executed on said target equipment, and the sequence of image(s) is then compared with a reference sequence of image(s);
- the checking result is computed according to the calculated elementary results, the checking result being preferably negative if at least one calculated elementary result is incorrect, and the checking result being positive otherwise; and
- the method further comprises a step of indicating the checking status of the application, according to the checking result for the application;
   the checking status being preferably equal to validated if the checking result is positive, or equal to rejected if the checking result is negative.

The subject-matter of the invention is also a computer program product including software instructions which, when implemented by a computer, implement a method as defined above.

The subject-matter of the invention is also an electronic checking system for checking performances of an application on a target equipment of a vehicle before validating into an applications catalog of a vehicle equipment manufacturer, said system being adapted to be able to connect to an applications platform which is configured to enable different applications developers to upload different applications to said platform, the system comprising an assembly of electronic modules, said assembly of electronic modules comprising:
- a receiving module configured for receiving an application selected by a user, preferably a vehicle equipment manufacturer, among different applications uploaded by applications developers and listed on said applications platform;
- a providing module configured for providing a set of testing items selected by the user;
- a generating module configured for generating a testing workflow according to the selected testing items;
- a testing module configured for testing the application by carrying out the testing workflow and generating a testing result,
- an image acquisition module configured for acquiring images of said testing result shown on a screen of the target equipment during testing of said application,
- an image processing module configured for comparing said testing result with an expected reference result, and
- a delivering module configured for delivering a checking message including a checking result for the application and preferably a recommendation for said vehicle equipment manufacturer to validate or reject said application.

The subject-matter of the invention is also an applications platform configured to be able to connect via a mobile network to different target equipments of different vehicle equipment manufacturers, said platform including software instructions which, when implemented by a computer, comprises:
- a first interface enabling different applications developers to upload different applications to said platform,
- a second interface providing different applications uploaded by at least one applications developer, said different applications being searchable by different vehicle equipment manufacturers with a search motor on said platform, at least one application being selectable by a vehicle equipment manufacturer to do a checking of performances by a method as defined above.

According to other advantageous aspects of the invention, the applications platform comprises one or several of the following features, taken individually or according to any technically possible combination:
said platform including software instructions which, when implemented by a target equipment of a vehicle equipment manufacturer, comprises:
- a third interface providing a channel for said applications catalog of said vehicle equipment manufacturer comprising applications validated by said vehicle equipment manufacturer, said third interface being accessible to a user of said target equipment;
- preferably, a fourth interface providing details of a validated application, when said application is selected by said user, said details further indicating whether said validated application is available to be installed to a control unit of said vehicle;
- preferably, a fifth interface providing pricing details for said validated application selected by said user, said firth interface being configured to enable said user to pay before an installation of said validated application.

### BRIEF DESCRIPTION OF THE DRAWINGS

The invention will be better understood upon reading of the following description, which is given solely by way of example and with reference to the appended drawings, wherein:
- Figure 1 is a schematic view of an electronic checking system according to the invention, for automatically checking an application into an applications catalog of a vehicle equipment manufacturer;
- Figure 2 is a flowchart of a method according to the invention, for automatically checking an application into an applications catalog of a vehicle equipment manufacturer, the method being implemented by the electronic checking system of Figure 1; and
- Figure 3 is a schematic view of an applications platform, which enables different applications developers to upload different applications, different vehicle equipment manufacturers to select applications to be tested according to the checking method of the invention, and a user of a target equipment of a vehicle to select an application to be executed on said vehicle.

### DETAILED DESCRIPTION OF PREFERRED EMBODIMENTS

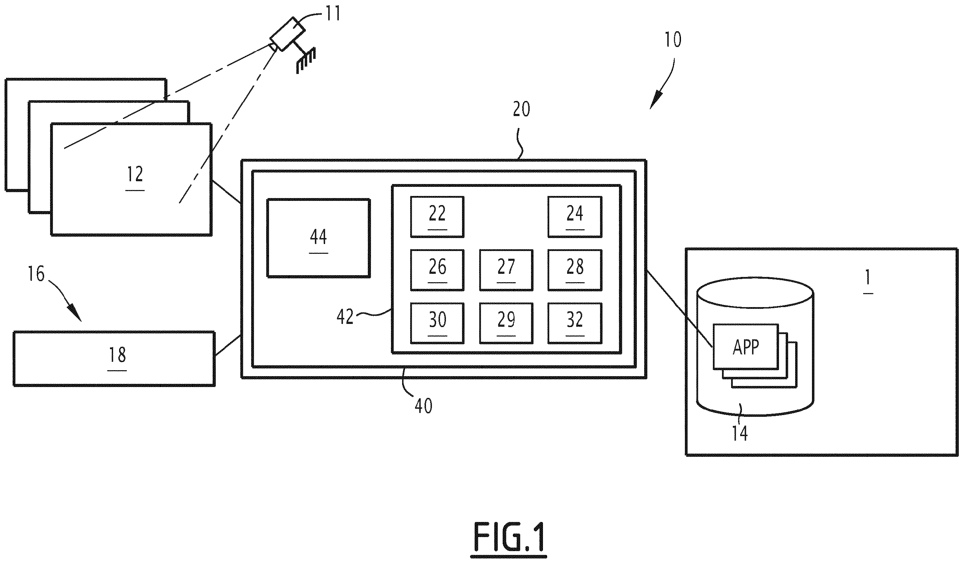

In Figure 1, an application checking system 10 includes at least one target equipment 12, a database 14 of applications provided by an applications platform 1, a user interface 16 having a display screen 18, and an assembly of electronic modules 20 connected to the target equipment(s) 12, the database 14 and the user interface 16.

Optionally, the application checking system 10 comprises an image sensor 11, e.g. a camera, for acquiring the images of at least one respective target equipment 12.

The application checking system 10 is configured for using said assembly of electronic modules 20 for checking performances of at least one application APP on the target equipment 12, said at least application being listed in an applications platform 1 which allows a vehicle equipment manufacturer to choose said application to be tested.

Each target equipment 12 includes a respective suitable execution environment, such as Android^{®} operation system, iOS^{®} operation system. Each target equipment 12 has a respective display screen, not shown, according to the design of its vehicle equipment manufacturer.

The target equipment 12 preferably vary from each other, typically by their execution environment and/or hardware characteristics, such as display screen size, processor type and/or frequency, amount of memory, etc. The target equipment 12 is for example an electronic control unit (ECU) of a vehicle.

The database 14 contains all the applications APP listed on said applications platform 1. Each application APP is a software application developed by an applications developer and presumed by said developer to be able to be run on at least one respective target equipment 12, and preferably without using a smartphone via Android Auto@ or Apple CarPlay^{®} to launch said application.

In the example of Figure 1, the database 14 is an external database connected to the assembly of electronic modules 20, the database 14 being provided by an applications platform 1.

The user interface 16 is known *per se.* The user interface 16 includes, for example, the display screen 18, such as a touch screen, to allow input of interaction(s) from a user, not shown. The display screen 18 allows the display of information, in particular display data generated by the assembly of electronic modules 20.

The assembly of electronic modules 20 comprises a receiving module 22, a providing module 24, a generating module 26, a testing module 28, an image acquisition module 27, an image processing module 29, and a delivering module 30.

In optional addition, the assembly of electronic modules 20 further comprises an indicating module 32.

In the example of Figure 1, the assembly of electronic modules 20 includes an information processing unit 40 formed by, for example, a memory 42 and a processor 44 associated with the memory 42.

In the example shown in Figure 1, the receiving module 22, the providing module 24, the generating module 26, the testing module 28,the image acquisition module 27, the image processing module 29 and the delivering module 30, as well as optionally the indicating module 32, are each implemented as software, or a software brick, executable by the processor 44.

Alternatively, not shown, the receiving module 22, the providing module 24, the generating module 26, the testing module 28, the image acquisition module 27, the image processing module 29 and the delivering module 30, as well as optionally the indicating module 32, are each realized in the form of a programmable logic component, such as an FPGA (Field Programmable Gate Array), or in the form of a dedicated integrated circuit, such as an ASIC (Application Specific Integrated Circuit).

When the assembly of electronic modules 20 is implemented as one or more software programs, i.e., as a computer program, it is further adapted to be recorded on a computer-readable medium, not shown. The computer-readable medium is, for example, a medium capable of storing electronic instructions and of being coupled to a bus of a computer system. For example, the readable medium is an optical disk, a magneto-optical disk, a ROM memory, a RAM memory, any type of non-volatile memory (e.g. EPROM, EEPROM, FLASH, NVRAM), a magnetic card or an optical card. A computer program with software instructions is stored on the readable medium.

The receiving module 22 is configured for receiving an application APP selected by the user, preferably by a vehicle equipment manufacturer, among different applications uploaded by applications developers and listed on the applications platform 1. In the example of Figure 1, the receiving module 22 is configured for receiving the application APP from the database 14, after selection of said application APP by the user typically by using the user interface 16 for said selection or by the vehicle equipment manufacturer via said applications platform 1.

The providing module 24 is configured for providing a set of testing items selected by the user or by vehicle equipment manufacturer. Each testing item is for example a security test, a hardware compatibility test, a connectivity compatibility test, an operating system compatibility test, or a services provider dependencies test.

The providing module 24 is for example configured for providing the set of testing items comprising at least one of the following items: the security test, the hardware compatibility test, the connectivity compatibility test, the operating system compatibility test, and the services provider dependencies test.

The security test is adapted for checking that some security requirements are respected by the application APP. As an example, the app should not display animated elements on the screen such as animated graphics, video, or progress bars, which will distract the driver attention on the driving. As another example, the app does not include games or other features outside the app types intended for vehicles.

The hardware compatibility test is adapted for checking compatibility between hardware requirements of the application APP and the hardware characteristics of a specific target equipment 12, such as a specific vehicle equipment or embedded device. As an example, the displaying size, an orientation and the resolution of the APP should be compatible with a target equipment 12 of a vehicle.

The connectivity compatibility test is adapted for checking compatibility between connectivity requirements of the application APP and the connectivity characteristics of a given country mobile network. As an example, the quality of mobile network is different from different countries, as a result, the requirement of minimum flow for a good function of an APP should not be higher than the quality of the mobile network in a given country where a vehicle will circulate. As another example, the app is tested to work with network cuts and different network quality to make sure there will be no abnormal behavior of the app.

The operating system compatibility test is adapted for checking compatibility between the application APP and a given operating system, in particular that the application APP respects driver distractive guidelines of the operating system, typically that the service calls issued from the application APP are compliant with the driver guidelines of the operating system.

The services provider dependencies test is adapted for checking compatibility between the application APP and the host system. As an example, if the APP is using Google^{®} login and if the host system does not allow it, the app will be flagged as incompatible.

The generating module 26 is configured for generating a testing workflow according to the selected testing items.

The generating module 26 is preferably configured for generating the testing workflow according to both the selected testing items and a predefined testing workflow. The predefined testing workflow is typically a sequence of all the items of the set of testing items, chained one after the other in a predefined order.

The generating module 26 is for example configured for generating the testing workflow by withdrawing, from the predefined testing workflow, the non-selected testing items, i.e. the testing items included in the set of testing items which have not been selected by the user.

The testing module 28 is configured for testing the application APP by carrying out the testing workflow and generating a testing result.
Advantageously, the testing module 28 comprises computing said testing workflow into a test scenario which comprises a series of elementary testing elements, and calculating an elementary result by comparing the behavior of the application APP running on the target equipment 12 with a reference behavior for each elementary testing element. The elementary result is correct if a gap between the application behavior and the reference behavior is below a predefined threshold, and the elementary result is incorrect otherwise.

The image acquisition module 27 is configured for acquiring images of said testing result showed on a screen of the target equipment 12 during testing of said application.

The image processing module 29 is configured for comparing said testing result with an expected reference result. Advantageously, the comparing includes acquiring a sequence of image(s) displayed on a screen of the target equipment 12.

For comparing the behavior of the application APP running on the target equipment 12 with the reference behavior regarding a respective test scenario, the testing module 28 is for example configured for acquiring, from an image sensor 11 or by using a screenshot function, a sequence of image(s) displayed on the screen of the target equipment 12 when the test scenario is executed by the application APP on said target equipment 12, and then for comparing the sequence of image(s) with a reference sequence of image(s). Accordingly, the testing module 28 is configured for calculating each elementary result as being correct if a difference between the acquired sequence of image(s) and the reference sequence of image(s) is below or equal to a predefined image threshold, and otherwise as being incorrect if said difference is above said predefined image threshold.

Advantageously, the above comparing is based on machine learning that is implemented by using an algorithm that corresponds to an artificial neural network and by using images as inputs.

The machine learning is configured to determine an optimized image processing parameter based on a learning result obtained by an algorithm that corresponds to an artificial neural network.

The machine learning is one field of artificial intelligence and denotes a process of enabling a computer to extract useful knowledge from accumulated data and draw a determination based on the extracted useful knowledge. The machine learning has a generalization capacity, which denotes processing with respect to new data that is input via a representation that evaluates data. There are various algorithms according to an approach of the machine learning, and as an example, an artificial neural network may be used.

The artificial neural network is obtained by modeling a structure of a human brain in which efficient recognition actions occur and are implemented as hardware, software, or a combination thereof. A human brain is composed of neurons, which are a basic unit of a nerve cell and which are connected via synapses to process information non-linearly and in parallel. A human brain performs learning while adjusting a connection form or connection intensity of synapses. In this aspect, the brain adjusts the connection intensity of the synapses by weakening a connection between neurons that lead to a wrong answer and strengthening a connection between neurons that lead to a correct answer.

The machine learning is known *per se.* In this invention, the machine learning is used to facilitate the comparing of test result with an expected reference result. For example, an expected behavior of an APP is represented as an reference image, then the machine learning algorithm extracts the contours of some main features in said reference image, the machine learning algorithm also extracts the contours for the same main features in said test result images, finally, the marching learning algorithm compares the contours of test result images with the contours of reference images to know whether they are significantly similar. With iteration, the machine learning algorithm will adjust the parameters for extracting the contours of images and before more and more accurate.

Instead of machine learning method, the comparing step mentioned above can performed by images comparison between the images obtained with screenshot function while running the testing scenario with the images of a sequence archived in a database which have been obtained previously while running the same test scenario. Such archived images form the reference sequence of image(s). Any suitable image comparison method known can be used.

Advantageously, the image processing module 29 is configured for computing the checking result according to the calculated elementary results.

The image processing module 29 is for example configured for computing the checking result as negative if at least one calculated elementary result associated to a mandatory testing item is incorrect, and otherwise as positive if the calculated elementary result(s) associated to all mandatory testing item(s) are correct.

Optionally, the image processing module 29 is configured for computing the checking result as negative if at least one calculated elementary result is incorrect, and otherwise as positive if all the calculated elementary result(s) are correct.

The delivering module 30 is configured for delivering a checking message including the checking result for the selected application APP. The delivering module 30 is for example configured for displaying said checking message on the display screen 18 of the user interface 16. Alternatively or in addition, the delivering module 30 is configured for transmitting said checking message to an interface of the applications platform 1 so that the vehicle equipment manufacturer could see the checking message. Preferably, the checking message could include also an option for said vehicle equipment manufacturer to validate the application into an applications catalog dedicated for it or reject said application.

In optional addition, the indicating module 32 is configured for indicating the checking status of the application APP into the applications catalog, according to the checking result for the application.

The indicating module 32 is typically configured for indicating the checking status as equal to validated if the checking result is positive, or else as equal to rejected if the checking result is negative.

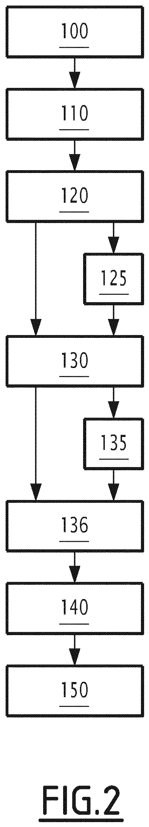

The operation of the assembly of electronic modules 20 according to the invention will now be explained in view of Figure 2 representing a flowchart of a method for checking performances of at least one application APP on a target equipment 12 of a vehicle before validating said application into an applications catalog of a vehicle equipment manufacturer, said method being implemented by said application checking system 10 as described above.

In an initial step 100, the assembly of electronic modules 20 receives, via its receiving module 22, the application APP that has been selected by the user among the different applications listed in the application platform 1.

In a next step 110, the assembly of electronic modules 20 provides, via its providing module 24, the set of testing items to be selected by the user. Each testing item is for example a security test, a hardware compatibility test, a connectivity compatibility test, an operating system compatibility test, or a services provider dependencies test.

In a next step 120, the assembly of electronic modules 20 generates, via its generating module 26, the testing workflow according to the selected testing items, and preferably according to both the selected testing items and the predefined testing workflow. The testing workflow is for example generated by withdrawing, from the predefined testing workflow, the non-selected testing items, i.e. the testing items which are included in the set of testing items while not having been selected by the user.

In a next step 130, the assembly of electronic modules 20 tests, via its testing module 28, the application APP by carrying out the testing workflow to generate a testing result.

Advantageously, in a step 135, the assembly of electronic modules 20 records, via its image processing module 29, the testing result. The recorded testing result could then be used for replaying and for acquiring some images to be further analyzed.

Advantageously, in a step 136, the assembly of electronic modules 20 computes, via its image processing module 29 configured for comparing said testing result with an expected reference result. Preferably, the step 136 computes said testing workflow into a test scenario which comprises a series of elementary testing elements, and an elementary result being calculated by comparing the behavior of the application APP running on the target equipment 12 with a reference behavior for each elementary testing element.

Advantageously, in a step 125, the assembly of electronic modules 20 compares, via its image processing module 29, images of said testing result with those of said expected reference result, said comparing step 125 being preferably based on machine learning that is implemented by using an algorithm that corresponds to an artificial neural network and by using said images as inputs.

For each selected testing item, the application APP is for example run on a respective target equipment 12 according to the respective test scenario, and a respective elementary result is then calculated by comparing the behavior of the application APP running on the target equipment 12 with the reference behavior for said test scenario.

During the computing step 136, each elementary result is for example calculated as being correct if the gap between the application behavior and the reference behavior is below or equal to the predefined threshold, and otherwise as being incorrect.

As an example, for comparing the behavior of the application APP running on the target equipment 12 with the reference behavior regarding a respective test scenario, the testing module 28 acquires, from the image sensor 11 or by a screenshot function, a respective sequence of image(s) displayed on the screen of the target equipment 12 when the test scenario is executed by the application APP on said equipment 12, and then compares the sequence of image(s) with the reference sequence of image(s). Accordingly, each respective elementary result is equal to correct if the difference between the acquired sequence of image(s) and the reference sequence of image(s) is below or equal to the predefined image threshold, and otherwise to incorrect.

At the end of the comparing step 136, the assembly of electronic modules 20 delivers, via its delivering module 30 and during next step 140, the checking message including the checking result for the selected application APP and preferably including an option for the user or the vehicle equipment manufacturer to validate or reject said application. The checking message is for example displayed on the display screen 18 of the user interface 16. Alternatively or additionally, the checking message is transmitted to the applications platform 1 so that the vehicle equipment manufacturer could validate or reject said application.

In optional next step 150, the assembly of electronic modules 20 indicates, via its indicating module 32, the checking status of the application APP into the database 14 according to the checking result for the application.

The checking status of the selected application APP is typically set to validated into an applications catalog if the checking result is positive, or otherwise to rejected if the checking result is negative.

As an illustrative example, with the assembly of electronic modules 20 and the related checking method according to the invention, one or several of the following features or criteria could be tested:
- the application APP launches in no more than 10 seconds;
- the application APP loads content in no more than 10 seconds;
- when the application APP is relaunched from the home screen, the application APP restores the application APP state as closely as possible to the previous state;
- interactive elements that are intentionally grayed-out must be non-functional;
- the navigation audio channel may only be used by navigation applications and for navigation instructions;
- the application APP must have simple flows if purchases are enabled, using shortcuts such as recent or favorite purchases;
- the application APP must not allow any of the following: setup of payment methods, multiple items to be selected for purchase and the user to commit to recurring payments (for example, subscriptions);
- the application APP does not present advertisements through notifications;
- the application APP displays notifications only when relevant to the driver's needs;
- the application APP does not auto-play on startup or without user initiated action to select said application or application media.
- the application APP receives incoming messages;
- messages are properly grouped and displayed in the correct order;
- the application APP uses short-form messaging application design patterns. Traditional long-form messaging applications, such as applications for email, are not permitted;
- the application APP implements a peer-to-peer messaging service and not notification services, such as those for weather, stocks, and sport scores;
- the application APP must provide turn-by-turn navigation directions;
- the application APP draws only map content on the surface of the navigation templates. Text-based turn-by-turn directions, lane guidance, and estimated arrival time must be displayed on the relevant components of the Navigation template. Additional information relevant to the drive (e.g., speed limit, road obstructions) can be drawn on the right side of the map;
- when the application APP provides text-based turn-by-turn directions, then it must also trigger navigation notifications;
- when the application APP provides text-based turn-by-turn directions, it must send next-turn information to the vehicle's cluster display;
- the application APP must not provide turn-by-turn notifications, voice guidance, or cluster information when another navigation application is providing turn-by-turn instructions;
- the application APP must handle navigation requests from other Android Auto@ applications;
- the application APP must draw a light-themed or dark-themed map when instructed accordingly;
- the application APP must provide a "test drive" mode that simulates driving;
- the application APP must provide meaningful functionality in its category relevant to driving; If a parking application is displaying a list of locations next to a map, then the locations in the list can only be parking spots. Similarly, for a charging application, the locations must be charging stations.

The above features or criteria are not exclusive, and they could be modified or replaced to conform to any automobile industry regulation.

Thus, the electronic checking system 10 and the related checking method according to the invention allow an easier and more efficient checking of performances of a selected application APP on a target equipment of a vehicle.

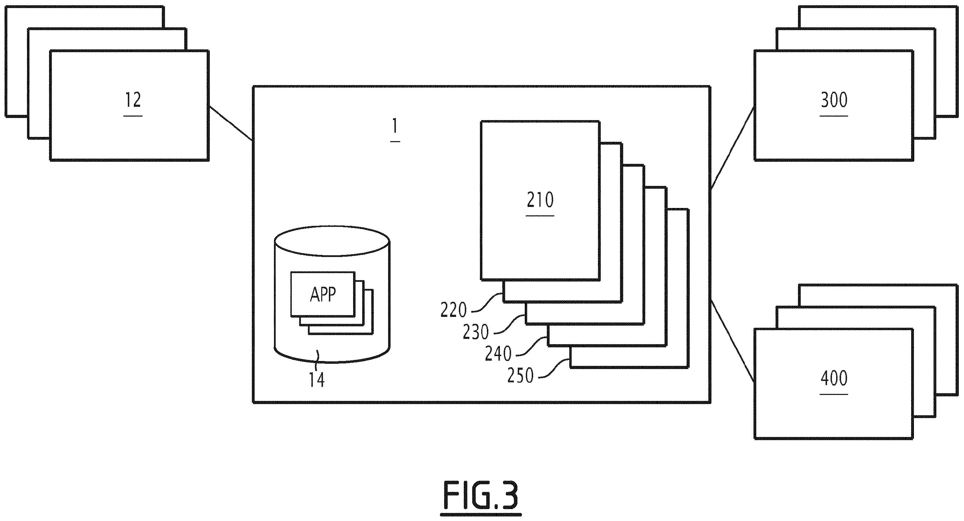

The operation of the applications platform 1 is represented in figure 3. The platform 1 is connected to different target equipment 12 of different vehicles, to connection terminals 300 of different vehicle equipment manufacturers, and to connection terminals 400 of applications providers. Typically, the applications platform 1 is executed on a computer, or on a computer associated with a database. The connection terminals 300 and 400 could be computers. The connection means could be internet networks or by mobile networks.

The applications platform 1 includes software instructions which, when implemented by a computer, comprises:
- a first interface 210 enabling different applications developers to upload different applications to said platform 1,
- a second interface 220 enabling different vehicle equipment manufacturers to select at least one application, uploaded by an applications developer, to be tested according to the checking method of the invention.

Preferably, in said second interface 220, said different applications are searchable by different vehicle equipment manufacturers with a search motor on said platform 1.

The applications platform 1 includes software instructions which, when implemented by a target equipment 12 of a vehicle equipment manufacturer, comprises:
- a third interface 230 providing a channel for said applications catalog of said vehicle equipment manufacturer comprising applications validated by said vehicle equipment manufacturer, said third interface being accessible to a user of said target equipment 12,
- a fourth interface 240 providing details of a validated application, when said application is selected by said user, said details further indicating whether said validated application is available to be installed to a control unit of said vehicle.
- a fifth interface 250 providing pricing details for said validated application selected by said user, said firth interface being configured to enable said user to pay before an installation of said validated application.

Thus, the vehicle equipment manufacturers, the applications developers and the users of target equipments of vehicle could work together via the applications platform 1 of this invention. Furthermore, each vehicle equipment manufacturer could personalize their applications catalog and select the most appropriate applications for their clients who are the users of target equipments. For the users of target equipments, they could need no more their smartphones to access different applications and they can choose easily the applications which are available for their target equipments.

## Claims

1. A method for checking performances of an application (APP) on a target equipment (12) of a vehicle before validating said application into an applications catalog of a vehicle equipment manufacturer, the method being implemented by an electronic checking system (10) and comprising the following steps:
- receiving (100) an application (APP) selected by a user among different applications provided on an applications platform (1), said platform (1) comprising a channel for said applications catalog of said vehicle equipment manufacturer and dedicated for storing different applications;
**characterized in that** it further comprises the following steps:
- providing (110) a set of testing items to be selected by the user;
- generating (120) a testing workflow according to the selected testing items;
- testing (130) the application (APP) to generate a testing result by carrying out the testing workflow;
- comparing (136) said testing result with an expected reference result, and
- delivering (140) a checking message including a checking result for the application (APP), said user being a user designed by said vehicle equipment manufacturer or said vehicle equipment manufacturer.

2. The method according to claim 1, wherein said method further comprises a step of recording (135) of said testing result.

3. The method according to claim 1 or 2, wherein said checking message includes a recommendation for said vehicle equipment manufacturer to validate or reject said application.

4. The method according to any one of the preceding claims, wherein, during the providing step (110), said set of testing items comprises at least one item chosen among the group comprising: a security test, a hardware compatibility test, a connectivity compatibility test, an operating system compatibility test, and a services provider dependencies test.

5. The method according to any one of the preceding claims, wherein, during the generating step (120), the testing workflow is generated according further to a predefined testing workflow;
the predefined testing workflow being preferably a sequence of all items of the set of testing items, in a predefined order.

6. The method according to claim 5, wherein the testing workflow is generated by withdrawing, from the predefined testing workflow, the non-selected testing items.

7. The method according to any one of the preceding claims, wherein said method further comprises a step of computing (125) said testing workflow into a test scenario which comprises a series of elementary testing elements, and an elementary result being calculated by comparing the behavior of the application (APP) running on the target equipment (12) with a reference behavior for each elementary testing element, the elementary result being correct if a gap between the application behavior and the reference behavior is below a predefined threshold, and the elementary result being incorrect otherwise.

8. The method according to any one of the preceding claims, wherein the step of comparing (136) includes acquiring a sequence of image(s) displayed on a screen of the target equipment (12) when the application (APP) is executed on said target equipment (12), and the sequence of image(s) is then compared with a reference sequence of image(s).

9. The method according to claim 7 or 8, wherein the checking result is computed according to the calculated elementary results,
the checking result being preferably negative if at least one calculated elementary result is incorrect, and the checking result being positive otherwise.

10. A computer program product including software instructions which, when implemented by a computer, implement a method according to any one of the preceding claims.

11. An electronic checking system (10) for checking performances of an application (APP) on a target equipment (12) of a vehicle before validating into an applications catalog of a vehicle equipment manufacturer, said system being adapted to be able to connect to an applications platform (1) which is configured to enable different applications developers to upload different applications to said platform (1), the system (10) comprising an assembly of electronic modules (20), said assembly of electronic modules (20) comprising:
- a receiving module (22) configured for receiving an application (APP) selected by a user, preferably a vehicle equipment manufacturer, among different applications uploaded by applications developers and listed on said applications platform (1);
**characterized in that** said assembly of electronic modules (20) further comprises:
- a providing module (24) configured for providing a set of testing items selected by the user;
- a generating module (26) configured for generating a testing workflow according to the selected testing items;
- a testing module (28) configured for testing the application (APP) by carrying out the testing workflow and generating a testing result,
- an image acquisition module (27) configured for acquiring images of said testing result shown on a screen of the target equipment (12) during testing of said application,
- an image processing module (29) configured for comparing said testing result with an expected reference result, and
- a delivering module (30) configured for delivering a checking message including a checking result for the application (APP) and preferably a recommendation for said vehicle equipment manufacturer to validate or reject said application.

12. An applications platform (1) configured to be able to connect via a mobile network to different target equipments (12) of different vehicle equipment manufacturers, said platform (1) including software instructions which, when implemented by a computer, comprises:
- a first interface (210) enabling different applications developers to upload different applications to said platform (1),
- a second interface (220) providing different applications uploaded by at least one applications developer, said different applications being searchable by different vehicle equipment manufacturers with a search motor on said platform (1), at least one application being selectable by a vehicle equipment manufacturer to do a checking of performances by a method according to any one of claims 1 to 9.

13. The applications platform (1) according to claim 12, said platform (1) including software instructions which, when implemented by a target equipment (12) of a vehicle equipment manufacturer, comprises:
- a third interface (230) providing a channel for said applications catalog of said vehicle equipment manufacturer comprising applications validated by said vehicle equipment manufacturer, said third interface being accessible to a user of said target equipment (12).

14. The applications platform (1) according to claim 13, comprising:
- a fourth interface (240) providing details of a validated application, when said application is selected by said user, said details further indicating whether said validated application is available to be installed to a control unit of said vehicle.

15. The applications platform (1) according to claim 13 or 14, comprising:
- a fifth interface (250) providing pricing details for said validated application selected by said user, said firth interface being configured to enable said user to pay before an installation of said validated application.
